# FASCICULE DE BREVET EUROPEEN

(11) **EP 1 773 851 B1**
(45) Date de publication et mention de la délivrance du brevet: **12.11.2008**
(21) Numéro de dépôt: 05778171.8
(22) Date de dépôt: 16.06.2005
(51) Int. Cl.: C07F 9/06

(54) **PROCEDE PERFECTIONNE DE FABRICATION D'ACIDE PHOSPHORIQUE**
VERBESSERTES VERFAHREN ZUR HERSTELLUNG VON PHOSPHORSÄURE
IMPROVED METHOD FOR MAKING PHOSPHORIC ACID

(30) Priorité: 13.07.2004 FR 0451524
(43) Date de publication de la demande: 18.04.2007
(73) Titulaire: Vichem, 38120 Fontanil Cornillon (FR)
(72) Inventeur: NINEUIL, Guy, F-38240 MEYLAN (FR); SIRBA, Thierry, F-38240 MEYLAN (FR)
(74) Mandataire: Denjean, Eric
(86) Numéro de dépôt international: PCT/FR2005/050451
(87) Numéro de publication internationale: WO 2006/016079

(56) Documents cités:
- EP-A- 0 181 029
- FR-A- 1 212 825
- FR-A- 2 130 847
- FR-A- 2 468 548
- US-A- 4 220 630
- DATABASE CA [Online] CHEMICAL ABSTRACTS SERVICE, COLUMBUS, OHIO, US; BESPALOV, A. V. ET AL: "Manufacture of wet - process phosphoric acid by dihydrate process with separate feed of apatite concentrate" XP002320022 extrait de STN Database accession no. 133:254491 & KHIMICHESKAYA PROMYSHLENNOST (MOSCOW) , (10), 625-628 CODEN: KPRMAW; ISSN: 0023-110X, 1999,
- DATABASE CA [Online] CHEMICAL ABSTRACTS SERVICE, COLUMBUS, OHIO, US; YAKUBOV, R. YA. ET AL: "Effect of seed crystals on the decomposition and crystallization of calcium sulfate dihydrate in production of wet - process phosphoric acid from the phosphorites of Karatau" XP002320023 extrait de STN Database accession no. 101:57165 & UZBEKSKII KHIMICHESKII ZHURNAL , (3), 43-6 CODEN: UZKZAC; ISSN: 0042-1707, 1984,

## Description

L'invention concerne un procédé perfectionné de fabrication d'acide phosphorique.

De manière connue, la fabrication d'acide phosphorique par voie humide consiste à attaquer du phosphate tricalcique avec de l'acide sulfurique en présence d'une solution diluée d'acide phosphorique provenant du lavage du gâteau formé de cristaux de sulfate de calcium (gypse) imprégnés d'acide phosphorique, par de l'eau appelée "eau de procédé". Trois des paramètres essentiels à maîtriser pour la bonne marche du procédé sont les concentrations en P₂O₅ et H₂SO₄, et le taux de solide dans le milieu. En ce qui concerne ce dernier paramètre, l'expérience a démontré que le taux de solides dans le milieu devait être compris entre 30 et 36 %. Le choix des paramètres relatifs aux concentrations P₂O₅ et H₂ SO₄ est quant à lui, essentiellement fonction de la qualité du phosphate à partir duquel est extrait l'acide phosphorique et de la structure de l'installation.

En terme de qualité de phosphate, on travaille depuis de nombreuses années à partir de phosphates de qualité moindre, dont la teneur en P₂O₅ est de l'ordre de 30 %, conduisant à produire un acide de teneur égale à 29 % environ de P₂O₅.

En terme d'installation, ont été ou sont exploitées des installations continues à réacteur unique ou multiple.

Le document FR-A-1 125 849 décrit ainsi une installation pour la fabrication d'acide phosphorique comprenant un réacteur unique dans lequel le taux en P₂O₅ est maintenu à 29 %, pour une concentration en H₂SO₄ d'environ 22 g/l et un taux de solides d'environ 35 %. Le maintien constant de la concentration en P₂O₅ est assuré par le recyclage de la solution d'acide phosphorique diluée recueillie à l'issue des lavages répétés à contre courant du gâteau au niveau du séparateur liquide solide. Par ailleurs, le taux de solides dans le milieu compris entre 30 et 36 % est assuré par recyclage d'une partie de l'acide phosphorique produit. Toutefois, la concentration élevée en P₂O₅ diminue la qualité de la cristallisation et par conséquent l'efficacité de la séparation ultérieure solide/liquide.

Pour résoudre ce problème, le document FR-A-2 468 548 décrit un procédé mettant en oeuvre au moins deux réacteurs, dans lesquels la concentration en P₂O₅ dans le premier réacteur est de 1 à 8 % plus faible que dans le second réacteur. Cela signifie en pratique que pour une concentration en P₂O₅ de 29 % dans le second réacteur, la concentration dans le premier réacteur est comprise entre 21 et 28 % de P₂O₅ ce qui engendre une cristallisation de bonne qualité. Après avoir constaté que dans cette fourchette de concentration, l'état de cristallisation des cristaux formés dans la première cuve et introduits dans la seconde cuve n'était pas modifié au contact des réactifs, il devenait évident de traiter la plus grosse proportion possible de phosphate dans le premier réacteur. Pour obtenir parallèlement un taux de solide suffisant dans les deux cuves, il est avantageux d'introduire dans le premier réacteur, outre la majeure partie des flux recyclés (solution d'acide phosphorique diluée obtenue par lavage à contre courant du gâteau issu du second réacteur et éventuellement une partie d'acide produit à 29 % de P₂O₅), environ les 2/3 du débit total de phosphate à attaquer et la quantité nécessaire d'H₂SO₄. Dans le second réacteur, on introduit la bouillie formée dans le premier réacteur, ainsi que le complément d'attaque et une partie importante de l'acide phosphorique à 29 %, produit par le séparateur liquide solide placé à la sortie du second réacteur. Même si ce type d'installation, en travaillant dans la première cuve à une concentration faible en P₂O₅ permet d'améliorer la qualité des cristaux formés et par conséquent l'efficacité de la filtration ultérieure, elle présente deux inconvénients essentiels. Le premier est de nécessiter, tout comme pour les installations à cuve unique, un recyclage d'une partie de l'acide phosphorique produit permettant d'assurer le maintien du taux de solide, principalement dans la seconde cuve. A temps de séjour égal avec la cuve unique, le volume de la première cuve est égal à 2/3 de celui de la cuve unique et le volume de la seconde cuve est égal à celui de la cuve unique soit un volume totale de 5/3. En outre, compte tenu du fait que la totalité des cristaux du premier réacteur est transférée dans le second, il est nécessaire de disposer d'un séparateur liquide solide dont la surface de filtration soit capable de traiter l'ensemble de la bouillie dont le gypse, après essorage, sera imprégné d'acide à la concentration finale de 29 % de P₂O₅, qu'il faudra reprendre par lavage à contre-courant à l'eau de procédé, comme c'est le cas pour la cuve unique. Enfin, une dégradation des conditions, conduisant par exemple à une dégradation de la cristallisation en deuxième cuve, nécessitera une action avec une grande inertie sur le résultat de par le passage obligé par la première cuve.

Le problème que se propose de résoudre l'invention est d'améliorer le procédé décrit dans le document FR-A-2 468 548 en gardant le principe de la différence des concentrations en P₂O₅ dans chaque cuve mais en mettant en oeuvre deux cuves dont la totalité du volume est identique à celui des cuves uniques, tout en maintenant un même taux de solide dans les deux cuves, à savoir compris entre 30 et 36 % et ce, sans recyclage d'acide phosphorique produit.

Le Demandeur a réussi à solutionner le problème en prévoyant une séparation solide/liquide, avec lavage à contre courant par l'eau de procédé, non pas à l'issue de la seconde cuve mais à l'issue de la première cuve. L'acide phosphorique produit à l'issue de cette séparation contient environ 20 % de P₂O₅ et est ensuite transféré dans la seconde cuve. L'acide phosphorique, récupéré par séparation solide /liquide de la seconde bouillie issue du second réacteur, est, quant à lui, à 29 %. Le gâteau obtenu est extrait et mélangé à la bouillie transitant de la première cuve vers le premier séparateur liquide solide. Cela signifie que l'eau de procédé va laver un gâteau provenant de l'essorage de ce mélange, imprégné par un liquide à environ 20 % de P₂O₅ et non à 29 % de P₂O₅ comme c'est le cas dans les documents cités de l'art antérieur. Il s'ensuit que le rendement de lavage du premier gâteau est optimum puisqu'il agit sur du solide dont l'acide d'imprégnation présente une concentration intermédiaire en P₂O₅ (de 5 % à 12 % inférieure à celle de l'acide final) permettant d'accroître la concentration en P₂O₅ de l'acide final, pour un résultat au moins équivalent.

En d'autres termes, l'invention a pour objet un procédé de fabrication d'acide phosphorique consistant en continu, dans au moins deux couples réacteur-séparateur solide/liquide successifs, dans lesquels la concentration en P₂O₅ dans le premier réacteur est inférieure à celle du second réacteur :
- dans le premier réacteur agité et maintenu à température constante, à attaquer entre 60 et 80 % du débit de phosphate tricalcique nécessaire avec de l'acide sulfurique dans un milieu réactionnel résultant de cette attaque et comprenant du sulfate de calcium hydraté dispersé dans une solution diluée d'acide phosphorique, dont l'eau est fournie par la totalité de l'eau de lavage à contre-courant du gâteau obtenu par séparation liquide solide sur un premier séparateur, du mélange de la bouillie provenant de ce premier réacteur et du gâteau extrait du second séparateur liquide/solide, la totalité de l'eau de lavage correspondant à la quantité d'eau nécessaire à l'obtention de la concentration souhaitée en P₂O₅ dans la solution finale d'acide phosphorique,
- à faire réagir dans le second réacteur agité et maintenu à température constante, le complément à 100 % du débit de phosphate tricalcique et la quantité d'acide sulfurique nécessaire à l'attaque, en présence de tout ou partie de l'acide phosphorique intermédiaire produit et recueilli par séparation liquide solide sur le premier séparateur du mélange de la bouillie provenant du premier réacteur et du gâteau extrait du second séparateur , l'acide phosphorique produit, ayant une concentration en P₂O₅ intermédiaire entre la teneur en P₂O₅ du premier réacteur et celle du second réacteur,
- enfin, par séparation solide/liquide de la bouillie issue du second réacteur sur un second séparateur, à recueillir l'acide phosphorique final produit présentant la concentration optimale en P₂O₅,
- parallèlement, à extraire le gâteau formé sur le second séparateur et le disperser dans la bouillie issue du premier réacteur avant séparation liquide/solide sur le premier séparateur.

En pratique, le taux de solide dans les deux cuves est maintenu proche de l'optimum, c'est à dire compris entre 30 et 36 % pour une concentration en P₂O₅ de l'acide final comprise entre 27 et 33 %, tout en tenant compte du bilan eau et P₂O₅ de l'ensemble attaque-séparation et de la qualité des phosphates, en introduisant dans le premier réacteur entre 65 et 70 % du débit de phosphate tricalcique nécessaire à la réaction, le complément à 100 % étant introduit dans le second réacteur.

Selon une première caractéristique du procédé, la concentration en P₂O₅ du premier réacteur est de 5 à 12 % inférieure à celle du second réacteur. En pratique, la teneur en P₂O₅ du second réacteur est d'environ 29 % et correspond à la teneur en P₂O₅ de la solution d'acide phosphorique finale, tandis que la concentration en P₂O₅ du premier réacteur est d'environ 20 %.

Du fait, comme déjà dit, de l'absence de recyclage d'acide phosphorique produit présentant une concentration en P₂O₅ donnée vers l'un et ou l'autre des réacteurs dans lequel la concentration en P₂O₅ serait identique, autrement dit en l'absence de recyclage d'acide phosphorique de même densité vers chaque réacteur, la concentration en P₂O₅ de l'acide phosphorique produit par le premier réacteur est la plus basse possible et ce, en maintenant un taux de solide compatible (30 % à 36 %). Il s'ensuit que l'acide sulfurique résiduel libre dans le premier réacteur est augmenté de manière optimale à 35 g/1, voire 50g/l, en fonction de la réactivité et/ou la granulométrie des phosphates utilisés pour obtenir une cristallisation du premier gypse optimale.

En outre, pour un temps de séjour donné, l'absence de recyclage de l'acide phosphorique produit permet de prévoir un premier réacteur présentant un volume réduit.

Comme déjà dit, on introduit dans le second réacteur 20 à 40%, avantageusement 30 à 35 % du phosphate tricalcique nécessaire à la réaction, en présence d'une quantité d'acide sulfurique telle, que l'on obtienne une teneur en acide sulfurique libre, en pratique de l'ordre de 20 - 30 g/l, cette valeur étant fonction de la qualité du phosphate. Selon l'invention, l'introduction de l'acide phosphorique produit par le premier réacteur, dans le second réacteur combiné au phosphate tricalcique complémentaire, et ce, sans ajout de liquide supplémentaire, permet de maintenir un taux de solide dans le second réacteur compris entre 30 et 36%.

Dans un premier mode de réalisation, la totalité de l'acide phosphorique produit dans le premier couple réacteur-séparateur est introduit dans le second réacteur.

Dans un second mode de réalisation, pour améliorer davantage encore le rendement du procédé de l'invention, on introduit une partie seulement de l'acide phosphorique produit dans le premier couple réacteur-séparateur dans le second réacteur, la partie restante étant utilisée pour extraire le liquide d'imprégnation du gâteau obtenu après séparation liquide/solide, sur le second séparateur, de la bouillie issue du second réacteur. En pratique, le liquide d'imprégnation est à 29% de P₂O₅, tandis que l'acide phosphorique issu du premier couple séparateur est à environ 20 % de P₂O₅. Cette opération permet ainsi de récupérer un maximum d'acide phosphorique de concentration finale à 29 % de P₂O₅. Le gâteau final est ensuite mélangé avec la bouillie du premier réacteur.

En pratique, environ 90 % de l'acide phosphorique produit dans le premier couple réacteur-séparateur est introduit dans le second réacteur, le complément étant utilisé pour l'extraction d'une partie du liquide d'imprégnation du gâteau obtenu après séparation liquide/solide de la bouillie issue du second réacteur, sans dilution notable de l'acide final.

Le gypse produit à la sortie du filtre du second réacteur est de moindre qualité et de quantité proche de la moitié du gypse produit dans le premier réacteur. Le résultat du mélange bouillie du premier réacteur / gâteau du second réacteur, est ensuite essoré puis lavé par l'eau du procédé. Le Demandeur a constaté que le gypse lavé donnait les meilleurs rendements soluble-eau à surface de filtration équivalente pour une même production d'acide phosphorique. De plus, le mélange entre la bouillie du premier réacteur et le gâteau du second séparateur aura une concentration proche de celle de l'acide produit au niveau du premier réacteur du fait de la répartition voisine de 2/3-1/3 entre les deux couples réacteurs-filtres. Ce mélange de la bouillie avec le gâteau du second séparateur permet de disperser ledit gâteau de manière homogène sur le premier séparateur et de faciliter ainsi le processus de filtration, au cours duquel on effectue le lavage à contre-courant (2 lavages, voire 3 lavages).

Selon une autre caractéristique importante du procédé, l'absence de recyclage de solution à 29 % de P₂O₅, permet, pour un temps de séjour donné, de prévoir un second réacteur de faible volume, en pratique représentant 1/3 du volume du premier réacteur.

Avantageusement, la température de la bouillie contenue dans le premier réacteur est comprise entre 82 à 85°C tandis que celle de la bouillie contenue dans le second réacteur est comprise entre 75 à 80°C.

L'un des avantages du procédé de l'invention est que le fonctionnement des deux couples réacteur-séparateur est fortement décorrélé et toute dégradation des conditions de fonctionnement, notamment celle du second couple (la plus sujette aux dégradations opératoires, par exemple une mauvaise cristallisation, d'où une difficulté importante à gérer le bilan d'eau) aura une faible incidence sur le fonctionnement global de l'installation de la production, du fait que le premier couple n'aura été que peu influencée par ces dégradations et que seulement 30 à 35 % de la totalité du phosphate est traité dans ce second couple. Plus généralement, il est possible de rattraper un départ de dégradation de la cristallisation du réacteur du second couple en suivant la filtrabilité sur le filtre correspondant, et selon, en modifiant uniquement les paramètres sur le second réacteur avant de perturber significativement les conditions du premier couple réacteur séparateur, dont le rôle est prépondérant.

L'invention utilise une installation pour la mise en oeuvre du procédé perfectionné de production d'acide phosphorique décrit ci-avant comprenant deux couples réacteur-séparateur respectivement :
- un premier couple constitué d'un réacteur de volume V associé à un séparateur de surface S
- un second couple constitué d'un réacteur de volume V/3 associé à un séparateur de surface S' environ égale à 25 % de S.

En terme de volume et de surface, les deux cuves ont un volume total équivalent à celui de la cuve unique décrite dans le document FR-A-1 125 849 et les deux filtres ont une surface totale au plus égale à celle décrite dans le document FR-A-2 468 548.

Dans le mode de réalisation selon lequel le gâteau obtenu après séparation liquide/solide de la bouillie issue du second réacteur n'est pas lavé par l'acide phosphorique produit par le premier couple, le premier séparateur est un filtre sous-vide, à bande ou à table tournante et le second séparateur est avantageusement un filtre sous vide, voire un décanteur, une centrifugeuse ou tout autre type destiné à ce genre d'opération de séparation solide - liquide.

Lorsque le gâteau obtenu après séparation liquide/solide de la bouillie issue du second réacteur est lavé par une partie de l'acide produit par le premier couple, le second séparateur est nécessairement un filtre sous-vide.

Par ailleurs, l'installation est, dans tous les cas, équipée d'un mélangeur intercalé entre le premier réacteur et le premier séparateur et dans lequel est introduit la bouillie issue du premier réacteur et le solide épaissi issu du second séparateur.

L'un des avantages de l'installation est d'avoir la possibilité de dégoulotter des installations existantes, moyennant un investissement réduit et permettant notamment de compenser très efficacement un changement de la nature des roches phosphatiques vers des teneurs en P₂O₅ plus faibles que celles préconisées préalablement lors de la conception de l'unité.

L'invention et les avantages qui en découlent ressortiront bien de l'exemple de réalisation suivant à l'appui de la figure annexée.

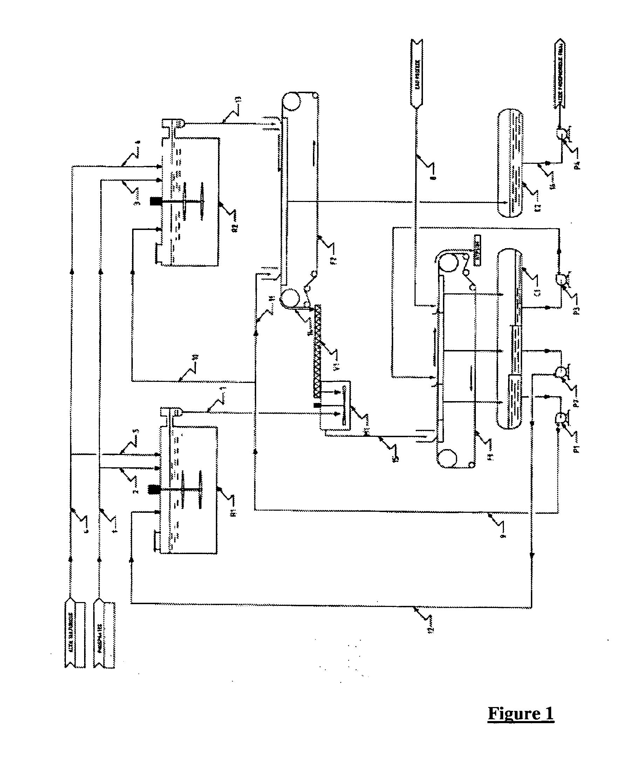

La figure 1 représente l'installation permettant la mise en oeuvre du procédé de l'invention.

Comme le montre cette figure, l'installation comprend deux réacteurs (R1) et (R2), le réacteur (R1) étant séparé du réacteur (R2) par un filtre sous-vide (séparateur) (F1), un filtre sous-vide (F2) étant lui-même installé en aval du second réacteur. Entre le réacteur (R1) et le filtre (F1), est positionné un mélangeur (M1) communiquant à la fois avec le réacteur (R1), le filtre sous-vide (F1) et le filtre sous-vide (F2). En pratique, le volume du réacteur (R2) représente 30 à 40 % du volume du réacteur (R1), tandis que la surface de filtration du filtre (F2) représente environ 25 % de la surface de filtration du filtre (F1).

L'installation et son fonctionnement vont maintenant être décrits en détails.

On introduit, dans la cuve (R1), 65 % de roche phosphate broyée (1, 2) ainsi qu'une solution d'acide sulfurique (5) dans une proportion telle que la teneur en acide sulfurique libre dans R1 soit égale à environ 35 g/l. Dans le réacteur (R2), on introduit 35 % de roche phosphate broyée (3), de même qu'une solution d'acide sulfurique (6) dans une proportion telle que la teneur en acide sulfurique libre dans R2 soit de 25 g/l environ. Le temps de séjour des espèces chimiques dans R1 et R2 doit être suffisant pour assurer l'état final de la cristallisation de sulfate de calcium dihydraté suivant la réaction suivante :

Ca₃(PO₄)₂ + 3 H₂SO₄ + 6 H₂O = 3 CaSO₄, 2 H₂O + 2 H₃PO₄

La concentration en P₂O₅ dans la première cuve est d'environ 20 % tandis qu'elle est de 29 % dans la seconde cuve.

On mélange dans M1, la bouillie (7) formée dans le réacteur (R1) avec le gâteau (14) issu du filtre F2. On alimente alors le filtre (F1) par ce mélange (15) où il est essoré par le vide, puis lavé en deux ou trois étapes à contre-courant par de l'eau de procédé (8) correspondant à la quantité nécessaire à la production de l'acide final de teneur en P₂O₅ souhaitée.

Environ 90 % de l'acide produit (9) provenant de F1 est envoyé dans le réacteur (R2), le complément à 100 % étant envoyé vers le filtre (F2). L'eau de lavage (12) comprenant de l'acide phosphorique, récupérée sous le filtre (F1), est envoyée au moyen d'une pompe (P2) dans le réacteur (R1).

En pratique, le gâteau sortant du filtre (F1) contient entre 15 et 30% d'eau sous forme libre, selon la qualité des phosphates utilisés.

La bouillie (13) formée dans le réacteur (R2) alimente le filtre (F2) où elle est tout d'abord essorée puis lavée par la mineure partie (11) de l'acide phosphorique produit et récupéré dans le filtre (F1). L'acide produit (16) correspond à l'acide final avec la teneur en P₂O₅ souhaitée. Parallèlement, le gâteau est évacué par un transporteur (V1) vers M1 où il est mélangé avec la bouillie (7) issue du réacteur (R1). Le mélange entre la bouillie du premier réacteur et du gâteau du second séparateur aura une concentration proche de celle de l'acide produit au niveau du premier séparateur du fait de la répartition voisine de 2/3- 1/3 entre les deux couples de réacteurs séparateurs. En conséquence, le gâteau qui est évacué du second filtre a un acide d'imprégnation intermédiaire plus proche en concentration en P₂O₅ de celui de la bouillie issue du premier réacteur que de celui de l'acide final, soit entre 20% et 22 %. Ce mélange de la bouillie avec le gâteau du second séparateur permet de disperser ledit gâteau de manière homogène sur le premier séparateur et de faciliter ainsi le processus de filtration, au cours duquel on effectue le lavage à contre-courant (2 lavages, voire 3 lavages).

Les avantages de l'invention ressortent bien de la description qui précède la forte indépendance de fonctionnement entre les deux couples, une grande fiabilité de fonctionnement, gage de production, de productivité et de rendement en P₂O₅ constants dans le temps.

## Revendications

1. Procédé de fabrication d'acide phosphorique consistant en continu, dans au moins deux couples réacteur-séparateur solide/liquide successifs, dans lesquels la concentration en P₂O₅ dans le premier réacteur est inférieure à celle du second réacteur :
- dans le premier réacteur, à attaquer entre 60 et 80 % du débit de phosphate tricalcique nécessaire avec de l'acide sulfurique dans un milieu réactionnel résultant de cette attaque et comprenant du sulfate de calcium hydraté dispersé dans une solution diluée d'acide phosphorique, dont l'eau est fournie par la totalité de l'eau de lavage à contre-courant du gâteau obtenu par séparation liquide solide, sur un premier séparateur, du mélange de la bouillie provenant de ce premier réacteur et du gâteau extrait du second séparateur liquide/solide, la totalité de l'eau de lavage correspondant à la quantité d'eau nécessaire à l'obtention de la concentration souhaitée en P₂O₅ dans la solution finale d'acide phosphorique,
- à faire réagir dans le second réacteur, le complément à 100 % du débit de phosphate tricalcique et la quantité d'acide sulfurique nécessaire à l'attaque, en présence de tout ou partie de l'acide phosphorique intermédiaire produit et recueilli par séparation liquide solide sur le premier séparateur du mélange de la bouillie provenant du premier réacteur et le gâteau extrait du second séparateur, l'acide phosphorique produit, ayant une concentration en P₂O₅ intermédiaire entre la teneur en P₂O₅ du premier réacteur et celle du second réacteur,
- enfin, par séparation solide/liquide de la bouillie issue du second réacteur sur un second séparateur, à recueillir l'acide phosphorique final produit présentant la concentration optimale en P₂O₅,
- parallèlement, à extraire le gâteau formé sur le second séparateur et le disperser dans la bouillie issue du premier réacteur avant séparation liquide/solide sur le premier séparateur.

2. Procédé selon la revendication 1, **caractérisé en ce que** la totalité de l'acide phosphorique produit dans le premier couple réacteur-séparateur est introduit dans le second réacteur.

3. Procédé selon la revendication 1, **caractérisé en ce qu'**on introduit une partie seulement de l'acide phosphorique produit dans le premier couple réacteur-séparateur dans le second réacteur, la partie restante étant utilisée pour extraire le liquide d'imprégnation du gâteau obtenu après séparation liquide/solide de la bouillie issue du second réacteur.

4. Procédé selon la revendication 1, **caractérisé en ce qu'**on introduit environ 90 % de l'acide phosphorique produit dans le premier couple réacteur-séparateur dans le second réacteur, le complément étant utilisé pour l'extraction d'une partie du liquide d'imprégnation du gâteau obtenu après séparation liquide/solide de la bouillie issue du second réacteur.

5. Procédé selon la revendication 1, **caractérisé en ce qu'**on introduit dans le premier réacteur entre 65 et 70 % du débit de phosphate tricalcique nécessaire à la réaction, le complément à 100 % étant introduit dans le second réacteur.

6. Procédé selon l'une des revendications précédentes, **caractérisé en ce que** le taux de solide dans les deux réacteurs est compris entre 30 et 36 % pour une concentration en P₂O₅ de l'acide final comprise entre 27 et 33 %.

7. Procédé selon l'une des revendications précédentes, **caractérisée en ce que** la concentration en P₂O₅ du premier réacteur est de 5 à 12 % inférieure à celle du second réacteur.

8. Procédé selon l'une des revendications précédentes, **caractérisé en ce que** la concentration en P₂O₅ du second réacteur est d'environ 29 %, tandis que la concentration en P₂O₅ du premier réacteur est d'environ 20 %.

9. Procédé selon l'une des revendications précédentes, **caractérisé en ce que** le taux d'acide sulfurique libre dans le premier réacteur est compris entre 35 et 50 g/l, tandis que le taux d'acide sulfurique libre, dans le second réacteur, est compris entre 20 et 30 g/l.

10. Procédé selon l'une des revendications précédentes **caractérisé en ce que** la température optimale de la bouillie contenue dans le premier réacteur est comprise entre 82 à 85°C tandis que celle de la bouille contenue dans le second réacteur est comprise entre 75 à 80°C.

## Claims

1. Method for producing phosphoric acid consisting in continuously, in at least two successive solid/liquid reactor-separator pairs, in which the P₂O₅ concentration in the first reactor is lower than that of the second reactor:
- in the first reactor, in attacking between 60 and 80% of the required throughput of tricalcium phosphate with sulphuric acid in a reaction medium resulting from this attack and comprising calcium sulphate hydrate dispersed in a dilute phosphoric acid solution, of which the water is supplied by all the water from the countercurrent washing of the cake obtained by liquid/solid separation, on a first separator, of the mixture of the slurry issuing from the first reactor and the cake extracted from the second liquid/solid separator, the total wash water corresponding to the quantity of water required to obtain the desired P₂O₅ concentration in the final phosphoric acid solution,
- in reacting in the second reactor, the remainder to 100% of the throughput of tricalcium phosphate and the quantity of sulphuric acid required for the attack, in the presence of all or part of the intermediate phosphoric acid produced and collected by liquid solid separation on the first separator of the mixture of the slurry issuing from the first reactor and the cake extracted from the second separator, the phosphoric acid produced, having a P₂O₅ concentration intermediate between the P₂O₅ content of the first reactor and that of the second reactor,
- finally, by solid/liquid separation of the slurry issuing from the second reactor on a second separator, in collecting the final phosphoric acid produced having the optimal P₂O₅ concentration,
- simultaneously, in extracting the cake formed on the second separator and dispersing it in the slurry issuing from the first reactor before liquid/solid separation on the first separator.

2. Method according to Claim 1, **characterized in that** all of the phosphoric acid produced in the first reactor-separator pair is introduced into the second reactor.

3. Method according to Claim 1, **characterized in that** only part of the phosphoric acid produced in the first reactor-separator pair is introduced into the second reactor, the remaining portion being used to extract the impregnation liquid of the cake obtained after liquid/solid separation of the slurry issuing from the second reactor.

4. Method according to Claim 1, **characterized in that** about 90% of the phosphoric acid produced in the first reactor-separator pair is introduced into the second reactor, the remainder being used for extracting part of the impregnation liquid of the cake obtained after liquid/solid separation of the slurry issuing from the second reactor.

5. Method according to Claim 1, **characterized in that** between 65 and 70% of the throughput of tricalcium phosphate required for the reaction is introduced into the first reactor, the remainder to 100% being introduced into the second reactor.

6. Method according to one of the preceding claims, **characterized in that** the solid content in the two reactors is between and 30 and 36% for a P₂O₅ concentration of between 27 and 33% in the final acid.

7. Method according to one of the preceding claims, **characterized in that** the P₂O₅ concentration of the first reactor is 5 to 12% lower than that of the second reactor.

8. Method according to one of the preceding claims, **characterized in that** the P₂O₅ concentration of the second reactor is about 29%, while the P₂O₅ concentration of the first reactor is about 20%.

9. Method according to one of the preceding claims, **characterized in that** the free sulphuric acid content in the first reactor is between 35 and 50g/l, while the free sulphuric acid content, in the second reactor, is between 20 and 30g/l.

10. Method according to one of the preceding claims, **characterized in that** the optimal temperature of the slurry contained in the first reactor is between 82 and 85°C, while that of the slurry contained in the second reactor is between 75 and 80°C.

## Patentansprüche

1. Verfahren zur Herstellung von Phosphorsäure, das darin besteht, dass man kontinuierlich in mindestens zwei aufeinanderfolgenden Reaktor-fest/flüssig-Separator-Paaren, bei denen die P₂O₅-Konzentration im ersten Reaktor niedriger als die des zweiten Reaktors ist,
- im ersten Reaktor zwischen 60 und 80 % des erforderlichen Tricalciumphosphats mit Schwefelsäure in einem Reaktionsmedium angreift, das sich aus diesem Angriff ergibt und hydriertes Calciumsulfat umfasst, das in einer verdünnten Phosphorsäurelösung dispergiert ist, deren Wasser von der Gesamtheit des Gegenstrom-Waschwassers des Kuchens geliefert wird, der durch in dem ersten Separator stattfindende flüssig/fest-Trennung der Mischung des von diesem ersten Reaktor kommenden Schlamms und des extrahierten Kuchens des zweiten flüssig/fest-Separators erhalten wird, wobei die Gesamtheit des Waschwassers der Wassermenge entspricht, die zum Erhalten der gewünschten P₂O₅-Konzentration in der endgültigen Phosphorsäurelösung erforderlich ist,
- man im zweiten Reaktor die Ergänzung zu 100% des Tricalciumphosphatdurchsatzes und die zum Angriff erforderliche Schwefelsäuremenge in Gegenwart der Gesamtheit oder eines Teils der Zwischenphosphorsäure reagieren lässt, die erzeugt und durch im ersten Separator stattfindende flüssig/fest-Trennung der Mischung des vom ersten Reaktor kommenden Schlamms und des extrahierten Kuchens des zweiten Separators gewonnen wird, wobei die erzeugte Phosphorsäure eine Zwischenkonzentration an P₂O₅ zwischen dem P₂O₅-Gehalt des ersten Reaktors und dem des zweiten Reaktors aufweist,
- schließlich man durch fest/flüssig-Trennung des vom zweiten Reaktor kommenden Schlamms in einem zweiten Separator die erzeugte endgültige Phosphorsäure gewinnt, die die optimale P₂O₅-Konzentration aufweist,
- man parallel den im zweiten Separator gebildeten Kuchen extrahiert und ihn vor flüssig/fest-Trennung im ersten Separator in dem vom ersten Reaktor kommenden Schlamm dispergiert.

2. Verfahren nach Anspruch 1, **dadurch gekennzeichnet, dass** die Gesamtheit der im ersten Reaktor-Separator-Paar erzeugten Phosphorsäure in den zweiten Reaktor eingeführt wird.

3. Verfahren nach Anspruch 1, **dadurch gekennzeichnet, dass** man nur einen Teil der im ersten Reaktor-Separator-Paar erzeugten Phosphorsäure in den zweiten Reaktor einführt, wobei der restliche Teil zum Extrahieren der Flüssigkeit zum Tränken des Kuchens verwendet wird, der nach flüssig/fest-Trennung des vom zweiten Reaktor kommenden Schlamms erhalten wird.

4. Verfahren nach Anspruch 1, **dadurch gekennzeichnet, dass** man etwa 90 % der im ersten Reaktor-Separator-Paar erzeugten Phosphorsäure in den zweiten Reaktor einführt, wobei die Ergänzung für die Extraktion eines Teils der Flüssigkeit zum Tränken des Kuchens verwendet wird, der nach flüssig/fest-Trennung des vom zweiten Reaktor kommenden Schlamms erhalten wird.

5. Verfahren nach Anspruch 1, **dadurch gekennzeichnet, dass** man in den ersten Reaktor zwischen 65 und 70 % des für die Reaktion erforderlichen Triacalciumphosphatdurchsatzes einführt, wobei die Ergänzung auf 100 % in den zweiten Reaktor eingeführt wird.

6. Verfahren nach einem der vorhergehenden Ansprüche, **dadurch gekennzeichnet, dass** der Feststoffgehalt in den beiden Reaktoren, bei einer P₂O₅-Konzentration der endgültigen Säure zwischen 27 und 33 %, zwischen 30 und 36 % beträgt.

7. Verfahren nach einem der vorhergehenden Ansprüche, **dadurch gekennzeichnet, dass** die P₂0₅-Konzentration des ersten Reaktors um 5 bis 12 % niedriger als die des zweiten Reaktors ist.

8. Verfahren nach einem der vorhergehenden Ansprüche, **dadurch gekennzeichnet, dass** die P₂O₅-Konzentration des zweiten Reaktors etwa 29 % beträgt, während die P₂O₅-Konzentration des ersten Reaktors etwa 20 % beträgt.

9. Verfahren nach einem der vorhergehenden Ansprüche, **dadurch gekennzeichnet, dass** der Gehalt an freier Schwefelsäure im ersten Reaktor zwischen 35 und 50 g/l beträgt, während der Gehalt an freier Schwefelsäure im zweiten Reaktor zwischen 20 und 30 g/l beträgt.

10. Verfahren nach einem der vorhergehenden Ansprüche, **dadurch gekennzeichnet, dass** die optimale Temperatur des im ersten Reaktor enthaltenen Schlamms zwischen 82 und 85 °C beträgt, während diejenige des im zweiten Reaktor enthaltenen Schlamms zwischen 75 und 80 °C beträgt.
